# FASCICULE DE BREVET EUROPEEN

(11) **EP 3 227 140 B1**
(45) Date de publication et mention de la délivrance du brevet: **28.10.2020**
(21) Numéro de dépôt: 15817447.4
(22) Date de dépôt: 23.11.2015
(51) Int. Cl.: B60Q 1/28, F21Y 101/00, F21Y 113/00

(54) **DISPOSITIF D'ÉCLAIRAGE ET/OU DE SIGNALISATION MOBILE POUR VÉHICULE AUTOMOBILE À DES FINS ÉVÉNEMENTIELLES**
BEWEGLICHE BELEUCHTUNGS- UND/ODER ANZEIGEVORRICHTUNG FÜR EIN KRAFTFAHRZEUG FÜR EREIGNISZWECKE
MOVEABLE LIGHTING AND/OR INDICATING DEVICE FOR A MOTOR VEHICLE FOR EVENT PURPOSES

(30) Priorité: 03.12.2014 FR 1461829
(43) Date de publication de la demande: 11.10.2017
(73) Titulaire: PSA Automobiles SA, 78300 Poissy (FR)
(72) Inventeur: LE DALL, Christophe, 92150 Suresnes (FR); GONCALVES, Whilk Marcelino, 75013 Paris (FR); GACOIN, Nicolas, 91380 Chilly Mazarin (FR)
(86) Numéro de dépôt international: PCT/FR2015/053173
(87) Numéro de publication internationale: WO 2016/087743

(56) Documents cités:
- EP-A1- 2 799 286
- WO-A1-2013/182802
- WO-A1-2014/032971
- JP-A- 2014 154 219
- US-A- 5 644 291
- US-A1- 2005 111 231
- US-A1- 2008 136 660
- US-A1- 2009 051 294
- US-B1- 6 292 097
- US-B2- 8 564 205

## Description

La présente invention se rapporte au domaine de l'évènementiel appliqué à un espace de vente tel qu'une concession, un garage automobile ou tout autre lieu d'exposition d'un véhicule.

Elle concerne plus particulièrement un dispositif d'éclairage et/ou de signalisation mobile (dynamique) d'un véhicule permettant d'assurer une animation visuelle lumineuse variée sur le lieu d'exposition où est stationné le véhicule.

Le véhicule se met lui-même en scène à partir de ses propres modules d'éclairage et/ou de signalisation mettant en valeur sa signature lumineuse et d'autres fonctions lumineuses du véhicule.

Les véhicules actuels disposent en règle générale, monté en série, d'un système de signalisation temporisée, qui provoque l'allumage simultané des quatre feux indicateurs de changement de direction (clignotants) suivant une fréquence de clignotement déterminée. Un tel système est notamment utilisé pour réaliser la fonction de feux de détresse mais aussi pour attirer l'attention des passants dans la cadre d'un salon automobile par exemple.

Des feux indicateurs de changement de direction de type dit « à défilement » nouvellement mis en série peuvent également être utilisés.

Un tel système ne permet pas d'offrir une animation visuelle lumineuse à grande diversité tant dans les mouvements/cinématique des modules d'éclairage et/ou de signalisation que dans l'intensité et/ou la couleur de l'éclairage généré par les modules.

Le document EP 2 799 286 A1 montre qu'il est connu d'utiliser dans un dispositif d'éclairage et de signalisation pour automobile un module lumineux rotatif présentant une face pour une fonction d'éclairage de nuit, une face pour la fonction feu diurne et une face supportant une inscription.

La présente invention a pour but de pallier aux inconvénients définis ci-dessus.

A cet effet, la présente a pour premier objet un dispositif d'éclairage et/ou de signalisation d'un véhicule automobile tel que défini dans la revendication 1.

Selon une caractéristique, il comporte en outre un troisième module tournant, disposé entre les premier et deuxième modules tournants ; chacun des trois modules tournants étant commandé successivement en commençant par le premier module tournant, puis le troisième module tournant et enfin le deuxième module tournant dans le cycle de rotation asynchrone.

Selon une autre caractéristique, il comporte au moins une deuxième source de lumière apte à générer un faisceau lumineux en direction de la deuxième face des modules tournants ; ladite source de lumière étant apte à générer une lumière à couleur changeante.

La présente invention a pour deuxième objet, un projecteur de véhicule automobile comportant un boitier supportant à rotation des modules tournants d'un dispositif tel que décrit ci-dessus.

Elle a pour troisième objet, un procédé de commande d'un dispositif d'éclairage et/ou de signalisation tel que décrit ci-dessus, ledit procédé consistant à commander au moins un cycle de rotation asynchrone et au moins un cycle de rotation synchrone des au moins premier et deuxième modules tournants, pendant la durée déterminée, à la suite d'une détection d'un signal de commande généré par l'organe de commande, pour orienter leurs premières faces vers ladite zone par une succession d'au moins deux rotations d'au moins 180° dans un sens puis dans l'autre de chaque module tournant avec une intensité lumineuse déterminée en fonction de la rotation de chaque module ; les premier et deuxième modules tournants présentant à la fin des deux cycles, leurs deuxièmes faces de manière visible de l'extérieur du véhicule.

Selon une caractéristique, le procédé consiste d'abord, à commander le cycle de rotations asynchrones puis le cycle de rotations synchrones des au moins premier et deuxième modules tournants dans la période de temps déterminée.

Selon une autre caractéristique mettant œuvre le dispositif comportant au moins une deuxième source de lumière apte à générer un faisceau lumineux en direction de la deuxième face des modules tournants ; ladite source de lumière étant apte à générer une lumière à couleur changeante, ledit procédé consiste, après la période de temps déterminé, les premier et deuxième modules tournants présentant leurs deuxièmes faces de manière visible de l'extérieur du véhicule, à désactiver la première source de lumière blanche, et à commander la deuxième source de lumière à couleur changeante, à intervalle de temps déterminé régulier, de manière à générer des couleurs distinctes à l'issue de chaque intervalle de temps.

Selon une autre caractéristique du procédé, la couleur de la lumière à couleur changeante, générée par la seconde source de lumière, varie en accord avec celle de l'éclairage d'ambiance intérieur du véhicule.

Selon une autre caractéristique, le procédé consiste à commander les cycles de rotations des modules à la suite d'une détection d'un signal de commande par l'organe de commande.

Selon une autre caractéristique, le signal de commande est issu d'une détection de présence dans la zone.

De tel dispositif et procédé selon l'invention, permettent d'offrir une animation visuelle lumineuse à grande diversité tant dans les mouvements/cinématique des modules d'éclairage et/ou de signalisation que dans l'intensité et/ou la couleur de l'éclairage généré.

Ils permettent en outre de mettre en avant toutes les fonctionnalités disponibles à partir de tels modules et d'utiliser ces fonctionnalités comme un argument de vente.

Avantageusement, l'intensité et la couleur de l'éclairage de chaque module peuvent varier en accord avec l'ambiance lumineuse intérieure du véhicule.

L'effet de clignotement connu de l'état de l'art est ici remplacé par des balayages harmonieux d'éclairage et/ou de signalisation, en azimut, dans la zone entourant le véhicule, avec des changements de couleurs.

D'autres caractéristiques et avantages d'un dispositif selon l'invention, apparaîtront encore à travers la description qui suit d'exemples de réalisation, donnés à titre indicatif et non limitatif, en référence au dessin annexé sur lequel :
- - la figure 1 est une vue en perspective montrant un véhicule automobile équipé de projecteurs intégrant un dispositif d'éclairage et/ou de signalisation mobile selon l'invention ;
- la figure 2 est une section dans le plan horizontal XY, schématique, en vue de dessus, illustrant le dispositif d'éclairage et/ou de signalisation mobile selon l'invention comportant trois modules mobile en rotation autour de l'axe Z ;
- la figure 3 illustre, schématiquement, une section transversale d'un des deux projecteurs (suivant X) passant par l'axe d'un des modules tournants selon l'invention, dans une position d'illumination de la zone avant du véhicule ;
- la figure 4 illustre un exemple d'animation visuelle d'une première phase dite « événementielle » mis en œuvre par le dispositif d'éclairage et/ou signalisation selon l'invention ;
- la figure 5 illustre les chronogrammes des vitesses de rotation (angle vs temps) des modules et intensité lumineuse (% intensité fonction d'éclairage vs temps) pour la première phase illustrée à la figure 4 ;
- la figure 6 illustre un exemple d'animation visuelle d'une seconde phase dite « vitrine » mis en œuvre par le dispositif d'éclairage et/ou signalisation selon l'invention ;
- la figure 7 illustre les chronogrammes des vitesses de rotation (angle vs temps) des modules et intensité lumineuse (% intensité fonction d'éclairage vs temps) pour la seconde phase illustré à la figure 6 ; et
- la figure 8 donne la légende des symboles utilisés dans les figures 4 à 7.
On définit par rapport au véhicule 1 (et donc par rapport au projecteur 2) un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le projecteur 2 comporte un boîtier 21 dont la face 22 externe comporte une courbure déterminée pour former avec les parties de carrosserie avoisinantes 40 (capot et aile) une continuité de forme contribuant à l'esthétisme de la face avant du véhicule 1.

Le dispositif 3 d'éclairage est agencé à l'intérieur du projecteur 2 pour adopter plusieurs configurations d'éclairage.

Le dispositif 3 d'éclairage comprend à cet effet, un équipage 5 mobile autour d'axes parallèles orientés en Z et comprend un module d'éclairage principal statique 6 assurant le niveau d'intensité réglementaire suivant l'axe longitudinal X du véhicule 1.

L'équipage 5 mobile comprend trois modules 51-53 d'éclairage et/ou de signalisation tournants aptes à se déplacer en rotation de plus ou moins 180° dans un sens et de plus ou moins 180° dans l'autre sens autour de leurs axes de rotation respectifs parallèles suivant Z.

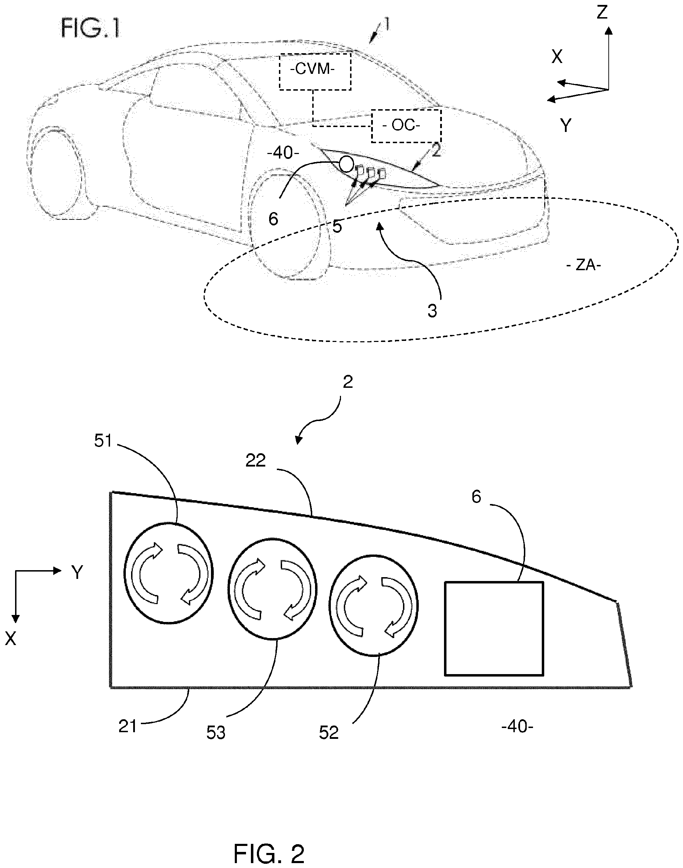

Les trois modules 51-53 sont disposés à proximité de l'aile avant droite 40 du véhicule 1 (à gauche du module d'éclairage principal 6, en considérant le projecteur avant droit 2 de la figure 2).

Ils sont disposés à égale distance les uns des autres à l'intérieur du projecteur 2 et leurs axes de rotation respectifs parallèles entre eux suivant Z, sont alignés suivant sensiblement un arc de cercle dont le rayon correspond sensiblement au rayon de courbure de la face externe 22 du projecteur 2 : le premier module référencé 51 est celui qui est le plus éloigné du module d'éclairage principal 6 fixe, le deuxième module référencé 52 est celui qui en est le plus proche (le plus à l'extérieur du véhicule 1) ; le troisième module référencé 53 est disposé entre les premier et deuxième modules 51 et 52.

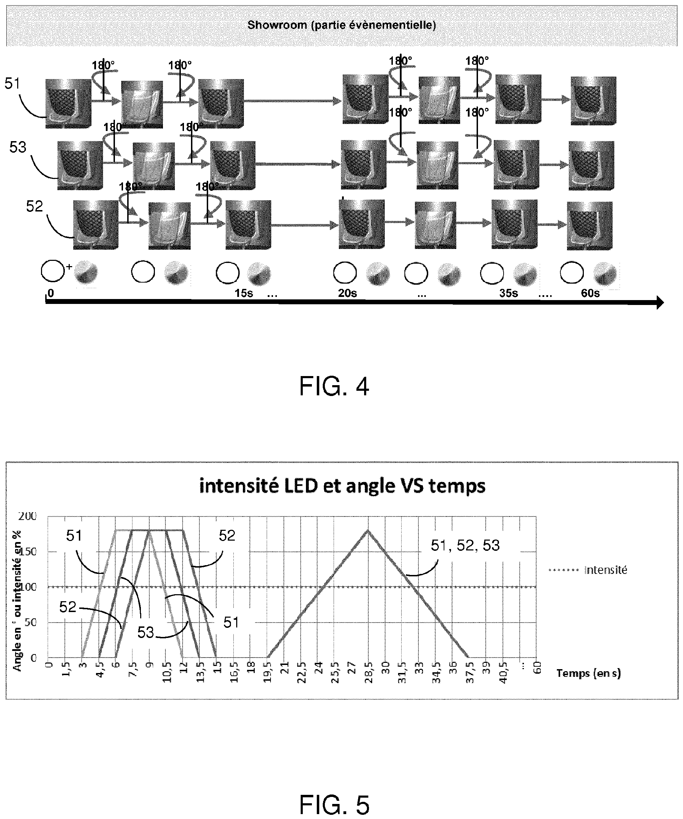

La figure 3 illustre un projecteur 2 selon l'invention, suivant une vue en coupe schématique, transversale, du projecteur 2 (suivant X), passant par le centre d'un des trois module tournants 51-52.

Chacun des trois modules tournants 51-53 comprend une monture définissant un plateau tournant 36 de forme générale cylindrique, monté à rotation sur le boitier 21 autour d'un axe vertical OZ.

Le plateau tournant 36 supporte sur sa face supérieure, un réflecteur 35 centrée sur l'axe OZ et solidaire du plateau 36. La face avant du réflecteur 35 définit une surface réfléchissante 37 de forme générale parabolique apte à réfléchir un faisceau lumineux émis par une première source de lumière 33, dite secondaire, comportant une ou plusieurs diode(s) électroluminescente(s) ou LEDs, aptes à générer une lumière blanche, dites LEDs blanches.

La ou les LEDs blanches 33 sont disposées sur un support fixe 32 par rapport au boiter 21, disposé en regard de la surface réfléchissante 37. Le support 32 est notamment une plaque de circuit imprimé (ou Printed Circuit Board - PCB) s'étendant parallèlement à la surface supérieure du plateau 36.

Le plateau 36 supporte en outre une lentille de projection 31, solidaire du plateau 36, s'étendant en regard de la surface réfléchissante 37 ; ladite lentille de projection 31 définissant une portion de paroi latérale cylindrique centrée dans le plan de coupe XZ. La lentille de projection 31 s'étend perpendiculairement au bord périphérique de la surface supérieure du plateau 36 supportant le réflecteur 35.

La lentille de projection 31 participe avec le réflecteur 35 à la projection du faisceau lumineux 40 vers l'extérieur du boitier 2, à l'avant 38 du véhicule 1.

La lentille 31 est réalisée, par exemple, dans un matériau transparent. Il s'agit de préférence d'une matière plastique synthétique, par exemple un polyacrylate, qui offre l'avantage d'offrir de bonnes propriétés optiques (notamment une bonne transparence) et mécaniques (notamment une bonne rigidité).

Le support PCB 32 supporte également une seconde source de lumière secondaire 34 disposée en aplomb de la face arrière du réflecteur 35.

Cette seconde source de lumière secondaire 34 est utilisée pour produire un rétro-éclairage 39 de lumière colorée, fixe ou changeante, vers les parois internes du boitier 21, masques ou d'autres parties appartenant au ou rapportées dans le boitier 21 ainsi que sur la face arrière du réflecteur 35.

Cette source de lumière colorée est obtenue à partir d'une diode électroluminescente particulière (LED en reprenant l'acronyme anglo-saxon) constituée de trois LEDs élémentaires de couleurs respectives rouge, verte et bleue (RGB en reprenant l'acronyme anglo-saxon), d'où la désignation de LED RGB, apte à produire un éclairage de couleurs changeantes obtenu par mélange des trois couleurs suivant les alimentations respectives des trois LEDs de couleur.

La face arrière du réflecteur 35 est recouverte d'un motif permettant d'identifier la marque du véhicule 1.

On désignera par la suite la face arrière du réflecteur 35, porteuse du motif par « face motif » MOT et la face avant du réflecteur 35, vue à travers la lentille de projection 31, par « face miroir » MIR.

Le motif peut être soit sérigraphié sur la face arrière du réflecteur 35 soit obtenu par grattage local de la face arrière. Il peut être également réalisé sur une coque rapportée sur la face arrière du réflecteur 35.

Une seconde lentille, non représentée, peut être disposée en regard de la face motif MOT et être supportée de la même manière que la lentille de projection 31 sur le plateau tournant 36.

Cette seconde lentille n'aura pas la même fonction optique que celle de la lentille de projection 31 mais sa tranche pourra être utilisée comme guide de lumière pour une lumière blanche émise par une autre source de lumière blanche non représentée qui serait disposée par exemple au voisinage de la LED RGB.

L'éclairage de la tranche aura pour effet de souligner la face motif MOT donc de la mettre en valeur.

Les deux faces (face motif MOT et face miroir MIR) sont donc disposées à 180° l'une de l'autre, ce qui signifie que pour passer d'une configuration dans laquelle la face miroir MIR est orientée vers l'arrière du boitier 21 (vers l'arrière du véhicule 1) à une configuration où cette même face MIR est orientée vers l'avant du véhicule 1, il faut faire tourner le module 51-53 d'un demi-tour (180°) autour de son axe de rotation OZ dans un sens ou dans l'autre (et réciproquement quand c'est la face motif MOT qui est exposée vers l'arrière du véhicule 1) .

Dans la configuration illustrée à la figure 3, le module tournant 51-53 est orienté avec sa face miroir MIR vers l'avant du véhicule 1 ; sa face motif MOT étant orientée vers le fond du boitier 21 du projecteur 2 (vers l'arrière du véhicule 1).

Les sources de lumières secondaires, blanches 33 ou colorées 34, peuvent être commandées indépendamment l'unes des autres ou conjointement. L'agencement des sources secondaires 33 et 34 sur leur support 32 PCB par rapport au réflecteur 35 et l'agencement du réflecteur 35 par rapport au support PCB 32 sont déterminés de manière à ce que les deux éclairages 39 et 40 soient de préférence confinés dans leurs zones d'éclairement respectives. A cet effet, la partie supérieure du réflecteur 35 est dimensionnée pour arriver au voisinage de la plaque support PCB 32 et servir de cloison pour les deux compartiments d'éclairage avant 40 et arrière 39.

Le système d'entraînement des modules tournants 51-53, non représenté, peut comprendre de manière connue, un mécanisme à base de bielle(s), cames et/ou d'engrenages, couplé aux modules tournants 51-53 pour assurer leur rotation de manière indépendante ou conjointe et/ou complémentaire avec des vitesses de rotation différentes.

Le système d'entraînement comprend, en outre, une motorisation telle qu'un moteur pas à pas, couplée au mécanisme et commandée par un organe de commande OC apte à commander les modules tournants 51-53 pour les faire tourner à différentes vitesses.

Le module d'éclairage principal 6 comporte de manière connue une source lumineuse apte à assurer l'éclairage principal du véhicule 1 dans l'axe longitudinal (selon X) du véhicule 1, par exemple une ampoule à gaz (typiquement halogène ou au xénon), ou encore à diode(s) électroluminescente(s) ou LED.

Un mode de fonctionnement d'une animation lumineuse de type événementiel selon l'invention et qui sera désigné par la suite par mode « showroom », en reprenant la terminologie anglo-saxonne désignant un espace de présentation d'un produit, est décrit ci-après en référence aux figures 4 à 7.

Le mode « showroom » selon l'invention comporte deux phases d'animation : une phase dite « événementielle » et une phase dite « vitrine ». La phase « événementielle » pourra interrompre la phase « vitrine » autant de fois que de besoin ; la phase « vitrine » reprenant son cycle là où il avait été interrompu par le cycle de la phase « événementielle ».

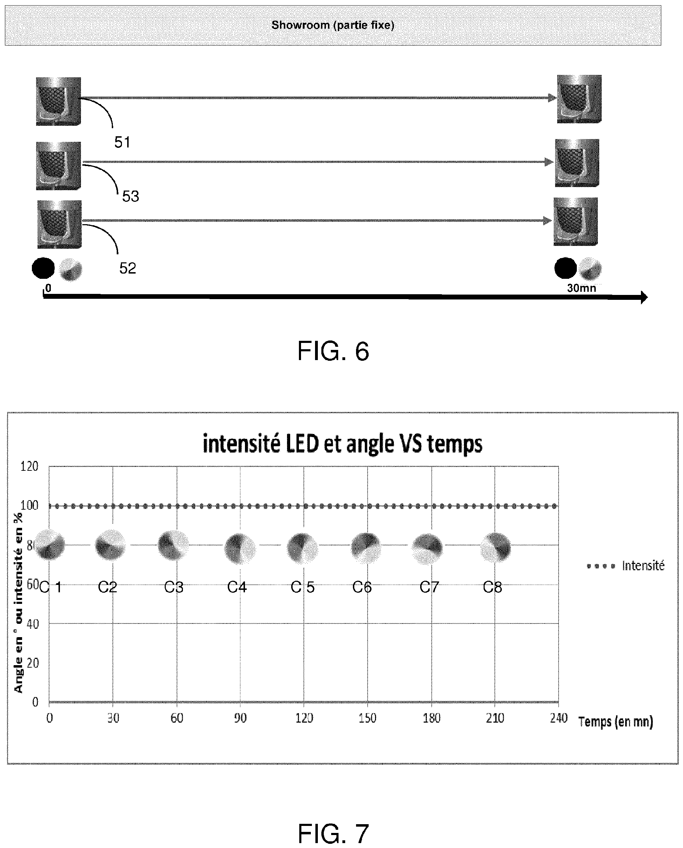

La figure 4 illustre un exemple de séquence d'animation visuelle correspondant à la phase ou partie « événementielle » respectant les lois de commande illustrées par les chronogrammes de la figure 5.

Dans cette séquence, l'organe de commande OC commande un enchaînement d'un premier cycle de rotations synchrones avec un seconde cycle de rotations asynchrones des trois modules tournants 51-53.

La séquence d'animation débute par exemple à la suite d'une commande à distance sur action du vendeur via le plip du véhicule 1 par exemple.

Le signal de commande est reçu par l'organe de commande OC qui à son tour, commande les modules tournants 51-53.

Cette phase peut également débuter à la suite d'une détection d'un passant évoluant à proximité du véhicule 1, devant le véhicule 1 dans la zone ZA, par un dispositif de détection de présence comportant par exemple, un ou plusieurs capteurs de déplacement, une caméra vidéo multifonction CVM, ...

En prenant, l'exemple d'une caméra vidéo multifonction CVM, cette dernière est disposée, par exemple, en haut du pare-brise du véhicule 1.

La caméra CVM délivre un signal de détection qui est transmis à l'organe de commande OC pour débuter l'animation conformément aux lois de commande illustrées par les chronogrammes de la figure 5.

Au début de l'animation (t=0), les modules tournants 51-53 sont tous orientés avec leur face motif MOT vers l'avant du véhicule 1 (suivant l'axe longitudinal du véhicule 1) ; orientation correspondant à l'état des modules 51-53 en phase « vitrine ».

Suite à une commande de l'organe de commande OC, les trois modules tournants 51-53 initient le premier cycle de rotations asynchrones d'une durée de 15s en associant des lumières blanches 40, générées par les premières sources de lumière secondaires 33, aux lumières à couleurs changeantes 39, générées par les secondes sources de lumière secondaires 34.

Le chronogramme de la figure 5 illustre les lois de commande, implémentées par l'organe de commande OC que suivent les trois modules tournants 51-53, sur une durée de ce premier cycle de T = 15s.

Un des effets recherché par l'animation visuelle est d'obtenir une continuité et une fluidité dans le mouvement de rotation des modules pour accroitre l'attractivité de l'animation visuelle.

Deux modules tournants peuvent néanmoins suffire pour obtenir cet effet, en exploitant par exemple uniquement les premier et deuxième modules 51 et 52.

Ainsi, en considérant les premier et deuxième modules 51 et 52 qui sont les modules les plus extrêmes du projecteur 2, tel qu'illustré aux figures 1 et 2, l'organe de commande OC commande, au bout de 3s, une première rotation du premier module tournant 51, préalablement dans une position face motif MOT orientée vers l'avant du véhicule, d'un angle de 180° autour de son axe de rotation OZ, suivant un premier sens de rotation, pour orienter sa face miroir MIR vers l'avant du véhicule.

A la fin de la première rotation du premier module tournant 51, au bout de 6s (face miroir MIR vers l'avant), l'organe de commande OC commande une première rotation du deuxième module tournant 52, préalablement dans une position face motif MOT orientée vers l'avant du véhicule, d'un angle de 180° autour de son axe de rotation OZ suivant le premier sens de rotation.

Au bout de 9s, quand le deuxième module 52 a terminé sa première rotation et présente sa face miroir MIR vers l'avant du véhicule 1, l'organe de commande OC commande une deuxième rotation du premier module 51 d'un angle de 180° selon un deuxième sens de rotation opposé au premier.

Au bout de 12s, quand le premier module 51 a terminé sa deuxième rotation, et présente sa face motif MOT vers l'avant du véhicule, le module de commande OC commande une deuxième rotation du deuxième module 52 d'un angle de 180° selon le deuxième sens de rotation ; les premier et deuxième modules tournants 51, 52 présentant à la fin du premier cycle de durée T = 15s, leurs faces motif MOT de manière visible de l'extérieur du véhicule 1.

A la fin du premier cycle, les deux modules 51 et 52 ont donc présenté chacun successivement leur face miroir MIR, pendant 3s, orientée vers l'avant du véhicule.

La continuité et la fluidité du mouvement peuvent être renforcées par la présence du troisième module tournant 53. Ce dernier est disposé entre les premier et deuxième modules tournants 51 et 52 de manière à ce que les rotations successives des trois modules 51-53 s'enchainent toutes les 1,5s à partir des trois premières secondes du premier cycle de durée T = 15s.

Ce qui se traduit par une première rotation du troisième module tournant 53 d'un angle de 180° autour de son axe de rotation OZ entre les premières rotations des premier 51 et deuxième 52 modules tournants et à une deuxième rotation du troisième module 53 d'un angle de 180° selon le deuxième sens de rotation entre les secondes rotations des premier 51 et deuxième 52 modules tournants.

Ainsi, l'organe de commande OC commande une première rotation du troisième module tournant 53, préalablement dans une position face motif MOT orientée vers l'avant du véhicule, au bout de 4,5s d'un angle de 180° autour de son axe de rotation OZ.

Au bout de 7,5s le troisième module 53 présente sa face miroir MIR vers l'avant du véhicule puis au bout de 10,5s l'organe de commande OC commande une deuxième rotation du troisième module 53 d'un angle d'au moins 180° selon le deuxième sens de rotation.

Le troisième module 53 présente sa face motif MOT orientée vers l'avant du véhicule 1 au bout de 13,5s.

Comme pour les premier et deuxièmes modules 51 et 52, à la fin du premier cycle, le troisième module 53 a présenté sa face miroir MIR, pendant 3s, orientée vers l'avant du véhicule. Comme illustré sur la figure 5, cette durée de 3s vient chevaucher les durées de 3s respectives aux premier et deuxième modules 51 et 52.

A la fin du premier cycle asynchrone, les modules tournants 51-53 sont tous orientés avec leurs faces motif MOT vers l'avant du véhicule 1. Les modules tournants 51-53 restent immobiles face motif MOT orientée vers l'avant du véhicule 1 pendant 4,5s. L'animation se poursuit, à partir de 19,5s par le deuxième cycle de rotations synchrones.

Le second cycle débute par une première rotation synchrone des modules tournants 51-53 de 180°, dans le premier sens de rotation, en 9s (période durant laquelle la face miroir MIR des trois modules tournants 51-53 est orientée vers l'avant du véhicule 1).

Cette première rotation se poursuit immédiatement d'une deuxième rotation de 180°, dans le deuxième sens, inverse du premier, également en 9s.

Le second cycle synchrone, succédant au premier cycle asynchrone, s'achève au bout d'une durée totale de 37,5s qui est paramétrable jusqu'à 60s.

L'amplitude de l'intensité lumineuse des éclairages de lumière blanche 40 (feux de position par exemple) et de couleur 39 (rétro-éclairage par exemple) reste constante et maximale (100%) durant toute la durée des premier et second cycles.

Comme pour le premier cycle asynchrone, l'animation décrite avec trois modules tournants 51-53 peut être réalisée avec seulement deux modules tournants 51-52 même si l'effet recherché s'en trouve amoindri.

A la fin de la phase « événementielle » dont la durée totale est paramétrée par défaut ou paramétrable par l'utilisateur, l'organe de commande OC commande les trois modules 51-53 en phase « vitrine ».

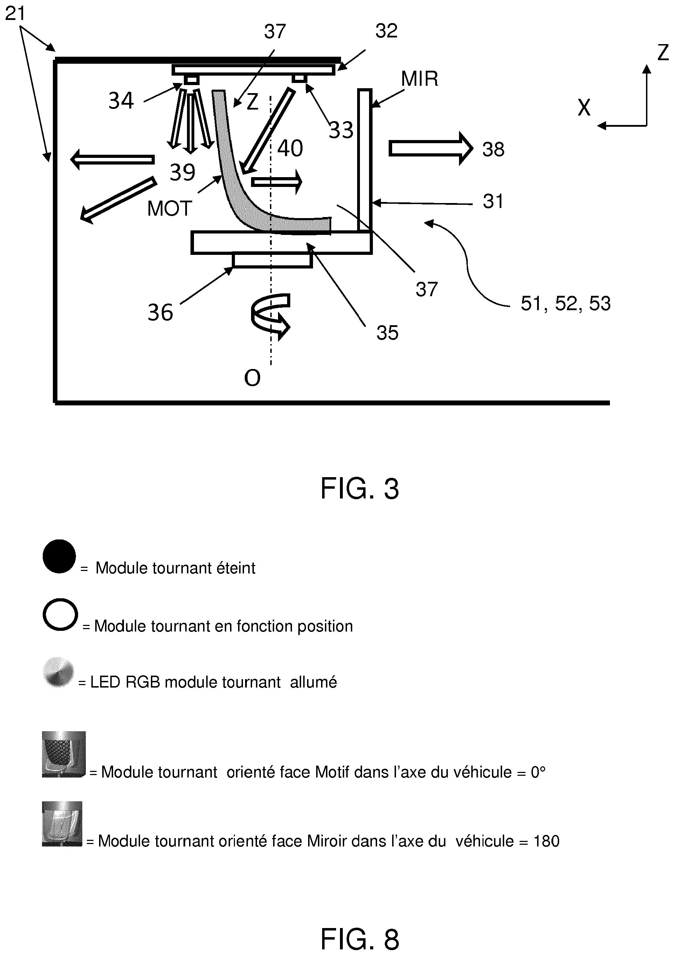

Les figures 6 et 7 illustrent respectivement l'état des modules tournants 51-53 et les lois de commandes associées à cette phase.

Les trois modules tournants 51-53 présentent tous leurs faces motif MOT vers l'avant du véhicule, lumière blanche 33 éteinte (feux de position éteints par exemple) et lumière colorée 34 active (rétro-éclairage).

Toutes les 30mn, l'organe de commande OC fait varier la couleur du rétro-éclairage. Huit teintes/couleurs C1-C8 sont disponibles à partir d'un réglage approprié des intensités des trois LED élémentaires RGB de la LED RGB 34.

On peut assimiler la phase « vitrine » comme une phase de repos ou de mise en veille du dispositif d'éclairage et/ou de signalisation du véhicule 1, phase dans laquelle la consommation en énergie électrique est minimale.

De manière avantageuse, lorsque l'éclairage d'ambiance intérieur du véhicule 1 permet un changement de couleur, la couleur du rétro-éclairage par les LEDs RGB 34, change de manière synchrone avec les mêmes teintes. Ces variations de couleurs des éclairages intérieur et extérieur, de manière synchronisée, renforce l'impact visuel de l'animation. La palette de couleurs des éclairages intérieur et extérieur peut être définie par le conducteur ou être prédéterminée par défaut dans le calculateur habitacle.

Cette animation visuelle peut s'intégrer dans une fonction d'éclairage et/ou de signalisation générale dite « d'accueil » qui se décline sous la forme de différentes mises en scènes de l'éclairage et/ou de la signalisation du véhicule 1 à destination du conducteur et des passagers du véhicule 1.

Ces mises en scène mettent notamment en jeu les moyens d'éclairage et/ou de signalisation extérieurs et des moyens d'éclairage intérieurs du véhicule 1 ; moyens qui peuvent par ailleurs participer à des ambiances visuelles entrant dans des ambiances « polysensorielles » personnalisables, en coopération avec d'autres organes ou équipements du véhicule.

## Revendications

1. Dispositif d'éclairage et/ou de signalisation d'un véhicule automobile (1), apte à illuminer une zone (ZA) s'étendant autour du véhicule (1), comportant au moins deux premières sources de lumière blanche (33) associée respectivement à au moins des premier (51) et deuxième (52) modules d'éclairage et/ou de signalisation tournants, aptes à générer respectivement des faisceaux lumineux suivant des directions déterminées, un organe de commande (OC) apte à commander la rotation et l'intensité lumineuse des premier (51) et deuxième (52) modules tournants, **caractérisé en ce que** chacun des premier (51) et deuxième (52) modules tournants présente une première face (MIR) et une deuxième face (MOT) opposée à la première : la première face (MIR) comportant une surface réfléchissante (37) apte à orienter le faisceau lumineux (40) émis par la première source de lumière blanche (33) vers ladite zone (ZA) et la deuxième face (MOT) supportant un motif ; ledit organe de commande (OC) commandant au moins un cycle de rotation asynchrone et au moins un cycle de rotation synchrone des premier et deuxième modules tournants (51, 52), pendant une durée déterminée (T), à la suite d'une détection d'un signal de commande, pour orienter leurs premières faces (MIR) vers ladite zone (ZA) par une succession d'au moins deux rotations d'au moins 180° dans un sens puis dans l'autre de chaque module tournant (51, 52) avec une intensité lumineuse des premières sources de lumière blanche (33) constante en fonction du temps.

2. Dispositif selon la revendication 1, **caractérisé en ce qu'**il comporte en outre un troisième module tournant (53), disposé entre les premier (51) et deuxième (52) modules tournants ; chacun des trois modules tournants (51-53) étant commandé successivement en commençant par le premier module tournant (51), puis le troisième module tournant (53) et enfin le deuxième module tournant (52) dans le cycle de rotation asynchrone.

3. Dispositif selon l'une des revendications 1 ou 2, **caractérisé en ce qu'**il comporte au moins une deuxième source de lumière (34) apte à générer un faisceau lumineux (39) en direction de la deuxième face (MOT) des modules tournants (51-53) ; ladite source de lumière (34) étant apte à générer une lumière à couleur changeante.

4. Projecteur (2) de véhicule (1) automobile comportant un boitier (21), **caractérisé en ce que** ledit boitier (21) supporte à rotation des modules tournants (51-53) d'un dispositif selon l'une des revendications précédentes.

5. Procédé de commande d'un dispositif d'éclairage et/ou de signalisation selon l'une des revendications 1 à 3, **caractérisé en ce qu'**il consiste à commander au moins un cycle de rotation asynchrone et au moins un cycle de rotation synchrone des au moins premier et deuxième modules tournants (51, 52), pendant la durée déterminée (T), à la suite d'une détection d'un signal de commande généré par l'organe de commande (OC), pour orienter leurs premières faces (MIR) vers ladite zone (ZA) par une succession d'au moins deux rotations d'au moins 180° dans un sens puis dans l'autre de chaque module tournant (51, 52) avec une intensité lumineuse en fonction du temps ; les premier et deuxième modules tournants (51, 52) présentant à la fin des deux cycles leurs deuxièmes faces (MOT) de manière visible de l'extérieur du véhicule (1).

6. Procédé selon la revendication 5, **caractérisé en ce qu'**il consiste d'abord, à commander le cycle de rotations asynchrones puis le cycle de rotations synchrones des au moins premier et deuxième modules tournants (51,52) dans la période de temps déterminée (T).

7. Procédé selon l'une quelconque des revendications 5 ou 6, et mettant œuvre le dispositif selon la revendication 3, **caractérisé en ce qu'**il consiste, après la période de temps déterminé (T), les premier et deuxième modules tournants (51, 52) présentant leurs deuxièmes faces (MOT) de manière visible de l'extérieur du véhicule (1), à désactiver la première source de lumière blanche (33), et à commander la deuxième source de lumière à couleur changeante (34), à intervalle de temps déterminé régulier, de manière à générer des couleurs distinctes à l'issue de chaque intervalle de temps.

8. Procédé selon la revendication précédente, caractérisé en ce la couleur de la lumière à couleur changeante, générée par la seconde source de lumière (34), varie en accord avecà celle d'un éclairage d'ambiance intérieur du véhicule.

9. Procédé selon l'une des revendications 5 à 7, **caractérisé en ce qu'**il consiste à commander les cycles de rotations des modules à la suite d'une détection d'un signal de commande par l'organe de commande (OC).

10. Procédé selon la revendication précédente, **caractérisé en ce que** le signal de commande est issu d'une détection de présence dans la zone (ZA).

## Patentansprüche

1. Beleuchtungs- und/oder Signalleuchtenvorrichtung eines Kraftfahrzeugs (1), die bereit ist, eine sich um das Fahrzeug (1) herum erstreckende Zone (ZA) zu beleuchten, mit mindestens den beiden ersten weißen Lichtquellen (33), die jeweils mindestens dem ersten (51) und dem zweiten (52) Modul von Beleuchtungs- und/oder Signalleuchtenblinkern zugeordnet sind, bereit, jeweils Lichtstrahlen zu erzeugen, die den bestimmten Richtungen folgen, eine Steuereinheit (OC), die bereit ist, die Drehung und die Lichtstärke des ersten (51) und des zweiten (52) Drehmoduls zu steuern, **dadurch gekennzeichnet, dass** jedes der ersten (51) und zweiten (52) Drehmodule eine erste Fläche (MIR) und eine zweite Fläche (MOT) aufweist, die der ersten entgegengesetzt ist: wobei die erste Fläche (MIR) eine reflektierende Oberfläche (37) aufweist, die bereit ist, den von der ersten weißen Lichtquelle (33) emittierten Lichtstrahl (40) in die vorgenannte Zone (ZA) zu lenken, und die zweite Fläche (MOT) einen Grund trägt; die vorgenannte Steuereinheit (OC), die mindestens einen asynchronen Drehzyklus und mindestens einen synchronen Drehzyklus des ersten und des zweiten Drehmoduls (51, 52) für eine begrenzte Dauer (T) nach der Erfassung eines Steuersignals steuert, um ihre ersten Flächen (MIR), die die vorgenannte Zone (ZA) durch eine Folge von mindestens zwei Umdrehungen von mindestens 180° in eine Richtung und dann in die andere jedes Drehmoduls (51, 52) mit einer zeitlich konstanten Lichtstärke der ersten weißen Lichtquellen (33) zu lenken.

2. Vorrichtung nach Anspruch 1, **dadurch gekennzeichnet, dass** sie außerdem ein drittes Drehmodul (53) umfasst, das zwischen dem ersten (51) und dem zweiten (52) Drehmodul angeordnet ist, wobei jedes der drei Drehmodule (51-53) nacheinander angesteuert wird, wobei mit dem ersten Drehmodul (51), dann dem dritten Drehmodul (53) und schließlich dem zweiten Modul (52) im asynchronen Drehzyklus begonnen wird.

3. Vorrichtung nach einem der Ansprüche 1 oder 2, **dadurch gekennzeichnet, dass** sie mindestens eine zweite Lichtquelle (34) umfasst, die bereit ist, einen Lichtstrahl (39) in Richtung der zweiten Fläche (MOT) der Drehmodule (51-53) zu erzeugen; wobei die vorgenannte Lichtquelle (34) bereit ist, ein Licht mit wechselnder Farbe zu erzeugen.

4. Projektor (2) eines Kraftfahrzeugs (1) mit einem Gehäuse (21), **dadurch gekennzeichnet, dass** das vorgenannte Gehäuse (21) drehbare Drehmodule (51-53) einer Vorrichtung nach einem der vorstehenden Ansprüche trägt.

5. Verfahren zur Steuerung einer Beleuchtungs- und/oder Signallichtvorrichtung nach einem der Ansprüche 1 bis 3, **dadurch gekennzeichnet, dass** es darin besteht, während der begrenzten Dauer (T) mindestens einen Zyklus asynchroner Drehung und mindestens einen Zyklus synchroner Drehung von mindestens einem ersten und einem zweiten Drehmodul (51, 52) zu steuern, nach der Erfassung eines von der Steuereinheit (OC) erzeugten Steuersignals ihre ersten Flächen (MIR) durch eine Folge von mindestens zwei Umdrehungen von mindestens 180° in eine Richtung und dann in die andere jedes Drehmoduls (51, 52) mit einer Lichtstärke-Lichtkonstante nach der Zeit in die vorgenannte Zone (ZA) zu lenken; wobei das erste und das zweite Drehmodul (51, 52) am Ende der beiden Zyklen ihre zweiten Flächen (MOT) sichtbar von der Außenseite des Fahrzeugs (1) präsentieren.

6. Verfahren nach Anspruch 5, **dadurch gekennzeichnet, dass** es darin besteht, zunächst den Zyklus der asynchronen Drehungen und dann den Zyklus der synchronen Drehungen von mindestens einem ersten und einem zweiten Drehmodul (51, 52) während der gegebenen Zeit (T) zu steuern.

7. Verfahren nach einem der Ansprüche 5 oder 6 und Inbetriebsetzung der Vorrichtung nach Anspruch 3, **dadurch gekennzeichnet, dass** es darin besteht, nach der gegebenen Zeit (T) das erste und das zweite Drehmodul (51, 52), die ihre zweiten Seiten (MOT) von der Außenseite des Fahrzeugs (1) sichtbar darstellen, zu deaktivieren, die erste weiße Lichtquelle (33) zu deaktivieren und die zweite Lichtquelle mit Farbwechsel (34) in einem gegebenen regelmäßigen Zeitintervall zu steuern, um am Ende jedes Zeitintervalls unterschiedliche Farben zu erzeugen.

8. Verfahren nach dem vorhergehenden Anspruch, **dadurch gekennzeichnet, dass** diese Farbe des von der zweiten Lichtquelle (34) erzeugten Lichts mit wechselnder Farbe in Übereinstimmung mit der einer gedämpften Innenbeleuchtung des Fahrzeugs variiert.

9. Verfahren nach einem der Ansprüche 5 bis 7, **dadurch gekennzeichnet, dass** es darin besteht, die Drehungszyklen der Module nach der Erfassung eines Steuersignals durch die Steuereinheit (OC) zu steuern.

10. Verfahren nach einem der vorhergehenden Ansprüche, **dadurch gekennzeichnet, dass** das Steuersignal aus einer Erfassung der Anwesenheit in der Zone (ZA) resultiert.

## Claims

1. Device of lighting and/or signal lights of a motor vehicle (1), ready to illuminate a zone (ZA) extending around the vehicle (1), comprising at least the first two sources of light white (33) respectively associated with at least with the first (51) and second (52) modules of lighting and/or signal lights turnings, ready respectively to generate beams of light following of the determined directions, a control unit (OC) ready to command the rotation and the luminous intensity of the first (51) and second (52) revolving modules, **characterized in that** each one of the first (51) and second (52) revolving modules present a first face (MIR) and a second face (MOT) opposed to the first: the first face (MIR) comprising a reflective surface (37) ready to direct the beam of light (40) emitted by the first white source of light (33) worms the aforementioned zone (ZA) and the second face (MOT) supporting a reason; the aforementioned control unit (OC) commanding at least an asynchronous cycle of rotation and at least a synchronous cycle of rotation of the first and second revolving modules (51, 52), for one limited duration (T), following a detection of a control signal, to direct their first faces (MIR) worms the aforementioned zone (ZA) by a succession of at least two rotations of at least 180° in a direction then in the other of each revolving module (51, 52) with a luminous intensity of the first sources of light white (33) constant according to time.

2. Device according to claim 1, **characterized in that** it comprises moreover a third turning module (53), laid out between the first (51) and second (52) revolving modules; each of the three revolving modules (51-53) being commanded successively while starting with the first turning module (51), then the third turning module (53) and finally the second module turning (52) in the asynchronous cycle of rotation.

3. Device according to one of the claims 1 or 2, **characterized in that** it comprises at least a second source of light (34) ready to generate a beam of light (39) in the direction of the second face (MOT) of the revolving modules (51-53); the aforementioned source of light (34) being ready to generate a light with changing colour.

4. Projector (2) of automobile vehicle (1) comprising a case (21), **characterized in that** the aforementioned case (21) supports rotating revolving modules (51-53) of a device according to one of the preceding claims.

5. Process of commanding of a device of lighting and/or signal lights according to one of claims 1 to 3, **characterized in that** it consists in commanding at least a cycle of asynchronous rotation and at least a cycle of synchronous rotation of at least first and second revolving modules (51, 52), for the limited duration (T), following a detection of a control signal generated by the control unit (OC), to direct their first faces (MIR) worms the aforementioned zone (ZA) by a succession of at least two rotations of at least 180° in a direction then in the other of each revolving module (51, 52) with an intensity luminous constant according to time; the first and second revolving modules (51, 52) presenting at the end of the two cycles their second faces (MOT) in a visible way of the outside of the vehicle (1).

6. Process according to claim 5, **characterized in that** it consists initially, to command the cycle of asynchronous rotations then the cycle of synchronous rotations of at least first and second revolving modules (51.52) during the given time of time (T).

7. Process according to any of claims 5 or 6, and putting work the device according to claim 3, **characterized in that** it consists, after the period of given time (T), the first and second revolving modules (51, 52) presenting their second faces (MOT) in a visible way of the outside of the vehicle (1), to disable the first white source of light (33), and to command the second source of light with changing colour (34), with regular given time interval, so as to generate distinct colours at the conclusion of each time interval.

8. Process according to the preceding claim, characterized this colour of the light with changing colour, generated by the second source of light (34), varies in agreement with that of an interior subdued lighting of the vehicle.

9. Process according to one of claims 5 to 7, **characterized in that** it consists in commanding the cycles of rotations of the modules following a detection of a control signal by the control unit (OC).

10. Process according to the preceding claim, **characterized in that** the control signal is resulting from a detection of presence in the zone (ZA).
